# EUROPEAN PATENT SPECIFICATION

(11) **EP 1 249 052 B1**
(45) Date of publication and mention of the grant of the patent: **22.04.2009**
(21) Application number: 01901354.9
(22) Date of filing: 18.01.2001
(51) Int. Cl.: H01M 8/10, H01M 8/08, H01M 8/04

(54) **FUELS FOR NON-ALKALINE FUEL CELLS**
BRENNSTOFFE FÜR NICHTALKALISCHE BRENNSTOFFZELLEN
COMBUSTIBLES POUR PILES À COMBUSTIBLE NON ALCALIN

(30) Priority: 18.01.2000 US 484267; 26.06.2000 US 604297
(43) Date of publication of application: 16.10.2002
(73) Proprietor: Tel-Aviv University Future Technology Development L.P., 69978 Tel-Aviv (IL)
(72) Inventor: PELED, Emanuel, 40500 Even Yehuda (IL); DUVDEVANI, Tair, 52233 Ramat Gan (IL); MELMAN, Avi, 58362 Holon (IL); AHARON, Adi, 46325 Herzliya (IL)
(74) Representative: Minoja, Fabrizio
(86) International application number: PCT/IL2001/000054
(87) International publication number: WO 2001/054220

(56) References cited:
- EP-A- 0 090 358
- GB-A- 2 281 642
- US-A- 3 357 861
- US-A- 4 562 123
- US-A- 4 650 729
- US-A- 5 599 638
- US-A- 5 773 162
- US-A- 5 945 231
- L.G.AUSTIN: "FUEL CELLS - A Review of Government-Sponsored Research, 1950-1964" 1967 , NASA REPORT N0 SP-120 , NATIONAL AERONAUTICS AND SPACE ADMINISTRATION, WASHINGTON, D.C. XP002182766 cited in the application page 224, left-hand column, last paragraph -right-hand column, paragraph 1; table 15.1
- "ETUDE DE L'OXYDATION ELECTROCHIMIQUE DU GLYCOL ETHYLENIQUE SUR ELECTRODES DE PLATINE 1. ETUDE EXPERIMENTALE DES COURBES INTENSITE-POTENTIEL ET SELECTIONDES CONDITIONS OPERATOIRES ELECTROCHEMICAL OXIDATION AND WATER CONVERSION OF ETHYLENE GLYCOL APPLICATION TO FUEL CELLS" REVUE DE L'INSTITUT FRANCAIS DU PETROLE, EDITIONS TECHNIP. PARIS, FR, vol. XXIV, no. 6, June 1969 (1969-06), pages 728-758, XP001039549 ISSN: 1294-4475
- GONZALES M J ET AL: "ELECTROCATALYTIC OXIDATION OF SMALL CARBOHYDRATE FUELS AT PT-SN MODIFIED ELECTRODES" JOURNAL OF PHYSICAL CHEMISTRY. B, MATERIALS, SURFACES, INTERFACES AND BIOPHYSICAL, WASHINGTON, DC, US, vol. 102, no. 49, 1998, pages 9881-9890, XP001039555 ISSN: 1089-5647
- OCON P ET AL: "THE ELECTROOXIDATION OF GLYOXYLIC ACID ON UPD MODIFIED GOLD ELECTRODES IN ACIDIC MEDIUM" BULLETIN OF ELECTROCHEMISTRY, CENTRAL ELECTROCHEMICAL RESEARCH INSTITUTE,, IN, vol. 15, no. 1, January 1999 (1999-01), pages 34-41, XP001039554 ISSN: 0256-1654
- PATTABIRAMAN R ET AL: "PLATINUM ALLOY BIMETALLIC CATALYSTS FOR FUEL CELLS" BULLETIN OF ELECTROCHEMISTRY, CENTRAL ELECTROCHEMICAL RESEARCH INSTITUTE,, IN, vol. 15, no. 9/10, September 1999 (1999-09), pages 394-399, XP001039553 ISSN: 0256-1654
- DATABASE CA [Online] CHEMICAL ABSTRACTS SERVICE, COLUMBUS, OHIO, US; HAMANN, C. H. ET AL: "Electric current from the direct conversion of low molecular weight carbon, hydrogen, oxygen compounds" retrieved from STN Database accession no. 88:123741 CA XP002182767 & J. POWER SOURCES (1976), 1(2), 141-57, 1976,
- WANG J ET AL: "EVALUATION OF ETHANOL, 1-PROPANOL, AND 2-PROPANOL IN A DIRECT OXIDATION POLYMER-ELECTROLYTE FUEL CELL" JOURNAL OF THE ELECTROCHEMICAL SOCIETY, ELECTROCHEMICAL SOCIETY. MANCHESTER, NEW HAMPSHIRE, US, vol. 142, no. 12, 1 December 1995 (1995-12-01), pages 4218-4224, XP000551129 ISSN: 0013-4651
- OKAMOTO T: "Methanol fuel cells" STN CHEMICAL ABSTRACTS, XX, XX, vol. 128, no. 13, 30 March 1998 (1998-03-30), XP002141901 -& PATENT ABSTRACTS OF JAPAN vol. 1998, no. 06, 30 April 1998 (1998-04-30) & JP 10 040936 A (HONDA MOTOR CO LTD), 13 February 1998 (1998-02-13)

## Description

### FIELD OF THE INVENTION

The invention relates to fuel cells and to organic fuels for use in fuel cells.

### BACKGROUND OF THE INVENTION

Hydrocarbons and aliphatic alcohols are very difficult to electro-oxidize completely (J. Wang, S. Wasmus, and R. F. Savinell , J. Electrochem. Soc. 142, 4218 (1995)),the main products of aliphatic alcohols oxidation being aldehydes or ketones, CO₂ and acids or esters. Even at 190°C, in a polymer-electrolyte membrane (PEM) Fuel Cell, the oxidation of ethanol is incomplete, the main oxidation product (over 60%) is ethanal while CO₂ is less than 40% of the oxidation products. A compound which does not electro-oxidize in 80% or more cannot be considered an efficient fuel. To the best knowledge of the inventors there has never been a report on the complete electro-oxidation of a compound having a C-C bond, except for oxalic acid (V. S. Bagotzky and Y. B. Vasilyev, Electrochemica Acta 9, 869 (1964)). There are several publications that teach fuels for use in fuel cells. Among them US 5,599,638 mentions the use of methanol, formaldehyde, formic acid, dimethoxymethane, trimethoxymethane, and trioxane. In a screening of about 150 organic compounds as potential fuels for fuel cells, which was carried out by NASA (NASA report No. SP-120 (1967), chapter 15, pp. 225 ff.) only methanol was checked for being an effective fuel. The other organic molecules were tested in acidic, neutral or basic solutions for their half cell potential, and the voltage of the electrode was measured at different currents and temperatures and the maximum power per cm² was calculated, assuming a theoretical oxygen electrode. All the molecules that were screened showed some maximum power in the range 1 to 250 mW/cm². However, this parameter does not teach whether a compound is a good candidate as a fuel. For example, methanol, which is considered a good organic fuel and ethanol, which can hardly be considered a fuel showed similar values of maximum power in acidic medium (13 and 15 mW/cm² respectively). It was reported in SP-120 (chapter 16, pp. 262 ff.) that ethylene glycol and urea performed poorly (in 30% KOH fuel cell). Some other molecules mentioned in this NASA report are glycerol, glyoxal aldehyde and glyoxylic acid.

### SUMMARY OF THE INVENTION

The present invention provides organic fuels for non-alkaline fuel cells. The organic fuels according to the present invention are selected from the group consisting of dimethyl oxalate (DMO), ethylene glycol (EG), its oxalic, glyoxalic, and formic esters, glyoxylic acid and its methyl esters, glyoxylic aldehyde, and poly(ethylene oxalate), the latter being a polyester of oxalic acid and ethylene glycol. The se organic fuels undergo clean and efficient oxidation in non-alkaline fuel cells, especially in acidic fuel cells. Preferable fuels according to the present invention are dimethyl oxalate, ethylene glycol, its formic acid ester, ethylene oxalate and poly(ethylene oxalate). Most preferable fuels according to the present invention are ethylene glycol and dimethyl oxalate. These fuel go over 80% conversion to CO₂, and leave only negligible amounts of nonvolatile side products when used as fuels in a fuel cell.

Non-limiting examples of fuel cells that may work satisfactorily with the fuels of the invention are liquid feed fuel cells, gas feed fuel cells, high temperature fuel cells, solid oxide fuel cells, molten carbonate fuel cells, and fuel cells that use proton exchange or proton conducting membranes. Preferably, fuel cells that use proton exchange or proton conducting membranes, or solid oxide fuel cells.

The invention also relates to the use of mixtures of said fuels, as well as mixtures thereof with known organic fuels, such as methanol, in non-alkaline fuel cells.

When non-alkaline fuel cells operate with the fuels of the invention they exhibit crossover current density which is lower than that the same fuel cells exhibit when operating with methanol, which is currently the most commonly used fuel in such cells. The low crossover current results in high efficiency. Without being bound to theory, it may be assumed that the low crossover currents are attributed to the large molecular size of the fuels of the invention, in comparison with that of methanol. The large molecular size is correlated with a small diffusion coefficient, which leads to small crossover current density.

Furthermore, the fuels of the invention have higher boiling points than methanol, thus transporting through the proton conducting membrane mainly in their liquid phase. Naturally, the diffusion coefficient in liquid phase is smaller than in the gas phase.

The solid fuels of the invention, such as DMO and poly(ethylene oxalate), may be advantageous over liquid fuels like methanol for several reasons such as their easier handling and their lower solubility in water. Thus, they maintain low concentration which helps in keeping the crossover current low. Furthermore, it is possible to store saturated solutions thereof, for example, in the anode chamber of the fuel cell, together with considerable amount of solid fuel, which dissolves when the cell is in operation and fuel is consumed, while the non-dissolved solid fuel serves as a fuel reservoir.

In accordance with another of its aspects the invention provides a direct oxidation non-alkaline fuel cell having an anode, a cathode comprising an oxygen reduction catalyst and a fuel oxidation catalyst, a proton conducing membrane disposed between said anode and said cathode, means for storing or supplying an organic fuel to the anode and means for supplying oxygen to the cathode, wherein said organic fuel is selected from the group consisting of dimethyl oxalate (DMO), ethylene glycol (EG), its oxalic, glyoxalic, and formic esters, glyoxylic acid and its methyl esters, glyoxylic aldehyde, and poly(ethylene oxalate). Preferable non-alkaline cells according to this aspect of the invention are those wherein the fuels are selected from the group consisting of dimethyl oxalate, ethylene glycol, its oxalic and formic acid esters, and poly(ethylene oxalate). Most preferable non-alkaline fuel cells according to this aspect of the present invention are those wherein the fuel is selected from the group consisting of ethylene glycol and dimethyl oxalate.

According to one embodiment, the non-alkaline fuel cell according to this aspect of the present invention is further **characterized in that** the CO₂ produced during the operation thereof is released through a thin hydrophobic porous matrix placed in the anode compartment or in the fuel tank, thus allowing the release of the gas without losing solution.

Examples of fuel oxidation catalysts are Pt-Ru, Pt-Sn, Pt-Ru-Sn, Pt-Ag-Ru, Pt-Os catalyst, or combination of these catalysts. The fuel oxidation catalyst at the cathode improves oxidation of the fuel that crossed over the membrane and prevents it from deactivating the oxygen reduction catalyst of the cathode, which typically is a Pt or Pt alloy catalyst. The practical ratio between the reduction catalyst to the oxidation catalyst is between 1% to 50%, preferably 5% to 20% (w/w) or between 0.01 to 5mg, preferably between 0.05 to 0.2mg oxidation catalyst per cm² of the oxygen electrode.

The concentration of the fuels in the cell at a predetermined temperature, can be evaluated through a method comprising the following steps:
(a) preparing calibration curves of crossover current vs. fuel concentration at said predetermined temperature in a non-alkaline fuel cell;
(b) measuring the crossover current at said predetermined temperature in said fuel cell; and
(c) evaluating the fuel concentration from the current measured in step (b) and the calibration curve prepared in step (a).

This method is based on the inventors finding that crossover current in fuel cells of the invention is directly proportional to the fuel concentration. For instance, the crossover current density of 1M EG at 80°C was found to be about twice that of 0.5M EG at the same temperature (41 and 19mA/cm², respectively) and the crossover current density of 0.25M DMO at 60°C was found to be about 2.5 times that of 0.1M DMO at the same temperature (2.5 and 0.9mA/cm², respectively). This finding is valid under conditions ensuring that the measured current is independent of the voltage at which it is measured.

This method may be applied to measure the fuel concentration of a fuel solution in a working fuel cell. This may be carried out by measuring the crossover current in the operating fuel cell. Alternatively, an auxiliary small fuel cell for carrying out the measurement may be provided. This alternative allows for the measurement in accordance with the invention without having to operate the whole fuel cell in the voltage required for the measurement. The auxiliary fuel cell may be physically separated from the fuel cell, build in it, attached to it or attached to the fuel tank.

The present invention also provides for a hybrid power source comprising at least one fuel cell according to the present invention a DC to DC converter, and a rechargeable battery.

Direct methanol fuel cell (DMFC) and liquid feed fuel cells (LFFC) are low power sources. However, devices like cellular telephones, computers and small electric vehicles need high power for short times. For these and for similar applications it is possible to combine a fuel cell according to the invention with a small high power rechargeable battery, which supplies the high power when required. Such a combination is advantageous over current art hybrid power source, *inter alia* thanks to the small crossover current. Today DC to DC converters can start working from 0.7V. As it is possible to combine as few as two or three fuel cells (in a series combination) through a DC to DC converter to a battery. If the crossover current density is small enough, say 15mA/cm² or less, preferably 5mA/cm² or less, such a hybrid power source need not be fueled very often. Therefore, this hybrid power source is preferably with a fuel cell of low crossover current density such as the fuel cell of the invention. The fuel cell charges the battery and supplies the low power demand while the high power battery supplies the heavy loads. This small number of required fuel cells enables the use of a flat and thin fuel cell system.

The present invention provides such hybrid power sources that are fueled with the fuels of the present invention. Fueling such hybrid power sources with a solid fuel of the present invention will be most advantageous.

For example, to power a cellular phone it is possible to use a hybrid power source built of two thin fuel cells, connected in a series combination and fueled by liquid fuels of the invention such as EG or by a solid fuel of the invention, such as DMO, a DC to DC converter and a small high power lithium ion cell.

### BRIEF DESCRIPTION OF THE DRAWINGS

In order to better understand the invention and to see how it may work in practice, several embodiments of the invention will now be described in detail, with reference to the accompanying drawings, in which:
Fig. 1 is a graph showing polarization curves of some fuels according to the present invention and some current art fuels; and
Fig. 2 is a schematic illustration of a solid feed organic fuel cell in accordance with the invention.

### COMPARATIVE EXAMPLES

### Example 1: Obtaining polarization curves for several fuels

A fuel cell was manufactured with the use of pure metal catalysts, instead of carbon supported catalysts. A cathodic catalyst ink was prepared by the following process:

A nano powder Pt (Pt black, purchased from "Johnson Matthey"), TeflonTM emulsion and NafionTM 5% solution were combined in the following weight proportions: 60%Pt, 25% Teflon emulsion and 15% Nafion. First the Pt powder and the Teflon emulsion were mixed by sonication for 15 minutes. After two sonication periods, the ink obtained was placed on a magnetic stirrer for at least one night.

An anodic catalyst ink was prepared by the following process: A Pt:Ru nano powder (Pt:Ru black 50% purchased from "Johnson Matthey") and PVDF were mixed in the following weight proportions: 91% catalyst powder and 9% PVDF. Propylene carbonate was added in an amount equal to 30-70% of the catalyst volume, then cyclopentanone was added and the ink obtained was stirred for at least one night.

Preparation of the electrodes: the cathode catalyst ink was applied on teflonated TorayTM carbon fiber paper, to form 4 mg Pt/cm². The ink (in the form of a paste) was spread in layers, allowing each layer to dry for about one hour, before the next layer was applied. This operation was repeated until the desired amount of catalyst was obtained. In the same way, the anode catalyst ink was applied on unteflonated TorayTM carbon fiber paper, until 5-10 mg catalyst/cm² was obtained. Both electrodes were washed with 3M sulfuric acid and then with water.

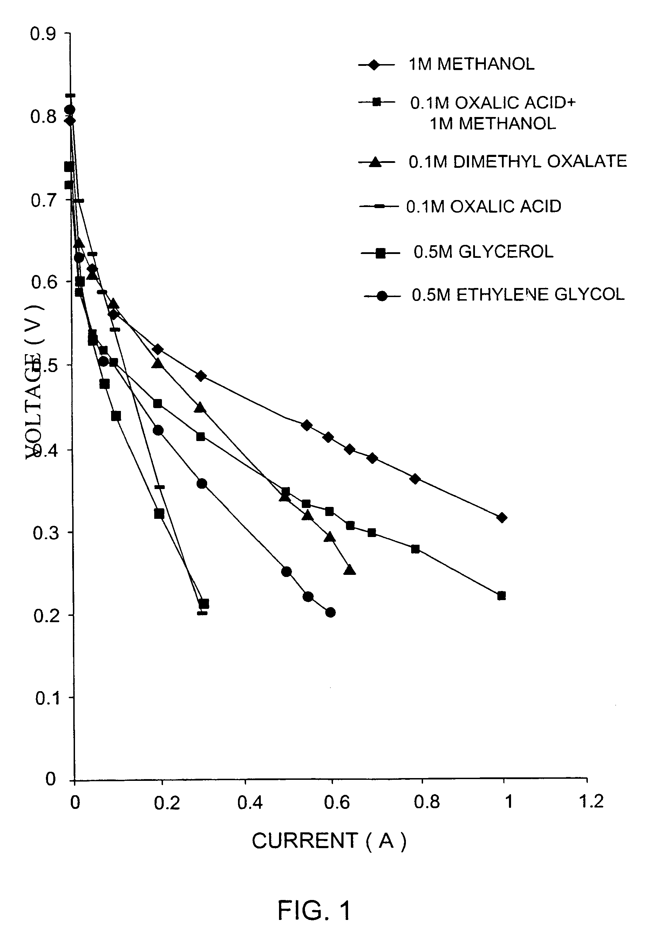

The cathode and the anode were placed on both sides of the PCM, with a thickness of 100-300 µm, parallel to each other and were hot pressed under a pressure of 10-70 Kg/cm² , at a temperature of 85-130° Fig. 1 illustrates polarization curves for this kind of fuel cell under the following conditions: a solution of the fuel and 3M H₂SO₄ was circulated through the anode at a rate of 9ml/min. Oxygen was circulated past the cathode at a pressure of 0.25 atm. over the atmospheric pressure. The cell temperature was 65°C. The PCM was 300 micron thick, consisting of (V/V) 16% nanosize powder of SiO₂, 24% PVDF and 60% pore volume, of 1.5 nm typical diameter. The cell demonstrated over 100 hours of stable operation at 0.4V. The fuels tested have been: methanol (1M), oxalic acid (0.1M with methanol 1M, Oxalic acid 0.1M, dimethyl oxalate 0.1M, ethylene glycol 0.5M, and glycerol 0.5M. (Of these, glycerol oxalic acid and methanol are not in accordance of the present invention.) As shown in the graph, under these conditions DMO and EG had the best performance. However, one should keep in mind that none of the conditions in this experiment was optimized, so that other concentrations and/or other catalysts could have resulted in qualitatively different observations.

Fuel utilization was determined by performing electrochemical titrations of 50 ml of fuel solution at constant voltage until the current dropped to 3 mA. It is estimated that at this current only a few percents of the fuel left not oxidized. The utilization was calculated by comparing the experimental capacity with the theoretical value. A further correction was made by extrapolation of the titration curves to zero current. This correction increases the utilization values by 3 to 6% (Table 1).

Fuel utilization at 0.2V was found to be 95% for DMO, 94% for EG and only 85% for methanol (see Table 1). At the more practical voltage of 0.4V, fuel utilization was found to be 89% for EG, 67% for DMO and 81% for methanol.

As the fuel does crossover to the cathode side, these high fuel utilization values suggest there is close to 100% fuel electro-oxidation.

Measurements of fuel crossover were carried out at several temperatures by feeding nitrogen instead of oxygen into the cathode compartment (at ambient pressure) and feeding organic fuel-acid solution into the anode compartment. Cell voltage was reversed; hydrogen was evolved at the fuel electrode while fuel that crossed over to the cathode side was oxidized. The current that flows at 1V was found to be the limiting current for oxidation of all fuels.

Table 2 summarizes the fuel crossover test results. The crossover current density depends on fuel permeability, temperature, concentration and on the total number of electrons involved in the oxidation. The crossover current density for 1M methanol (at 80°C) is double that of 1M EG and that of 0.25M DMO. However, when the number of electrons is taken into account and the fuel flux in terms of mol·s⁻¹·cm⁻² (at 80°C and under diffusion-controlled conditions) is normalized to 1M fuel, it can be seen that the permeability (flux) of EG is one-third that of methanol while that of DMO is almost as large as that of methanol.

**Table 1: Utilization comparison of different fuels.**

| | Number of electrons | Theoretical Capacity [Ah/g] | Utilization At 0.4V* [%] | | Utilization At 0.2V* [%] | |
|---|---|---|---|---|---|---|
| | | | Exp. | Corr. | Exp. | Corr |
| Oxalic acid | 2 | 0.43 | | | 91 | |
| Methanol | 6 | 5.03 | 79 | 81 | 82 | 85 |
| Ethylene glycol | 10 | 4.32 | 83 | 89 | 89 | 94 |
| Dimethyl oxalate | 14 | 3.18 | 64 | 67 | 93 | 95 |

| | | | | | | |
|---|---|---|---|---|---|---|
| *An average of at least two tests; Exp. - experimental values; Corr. - corrected values, see text. | | | | | | |

**Table 2: Crossover of different fuels.**

| 1. Fuel | | **Crossover test:** | | |
|---|---|---|---|---|
| | Temp. [°C] | Conc. [M] | Crossover current Density [A/cm²] | Fuel flux* [mol·s⁻¹·cm⁻²] 1x10⁻⁸ |
| Dimethyl oxalate | 60 | 0.10 | 0.009 | 6.7 |
| | 60 | 0.25 | 0.025 | 7.4 |
| | 80 | 0.25 | 0.038 | 11 |
| Ethylene glycol | 80 | 0.5 | 0.019 | 3.9 |
| | 80 | 1.0 | 0.041 | 4.2 |
| Methanol | 80 | 1.0 | 0.076 | 13 |

| | | | | |
|---|---|---|---|---|
| * Normalized to 1M | | | | |

### Example 2: Application of fuels according to the invention to a Nafion^{™} based fuel cell

A fuel cell housing was fabricated from synthetic graphite plates purchased from Globetech Inc., in which a flow field was engraved.

The anode was formed using a platinum-ruthenium ink that was spread on a carbon fiber sheet commercially available from Toray^{™} paper. The catalyst layer consists of 15% Teflon (DuPont), 15% Nafion^{™} and 70% Pt-Ru nanopowder (Pt:Ru black 50% purchased from "Johnson Matthey"). Anode loading was 5mg/cm². The cathode used was a commercially available ELAT E-TEK™ consisting of 4mg Pt/cm² and 0.6 mg nafion/cm². The anode and cathode were hot pressed to a 117 Nafion membrane, available from DuPont, to form the membrane electrode assembly (MEA) as described in Example 1.

After cooling the MEA was placed between the graphite flow field plates, a polypropylene sealing was inserted and the cell was assembled.

During operation, an aqueous solution of a fuel selected from oxalic acid, dimethyl oxalate, ethylene glycol, glycerol, in the concentration range of 0.1-0.5 M was circulated past the anode (with the use of a peristaltic Masterflex L/S Cole-Parmer Instrument Co. pump) at different flow rates from 4 to 15ml/min.

Oxygen was fed into the cathode chamber directly or through a water bubbler at an ambient pressure and at a rate of 7 to 40 ml/min. The cells were run at 60°C. The polarization curves were found to be similar to those of Figure 1.

### Example 3. Solid feed organic fuel cell

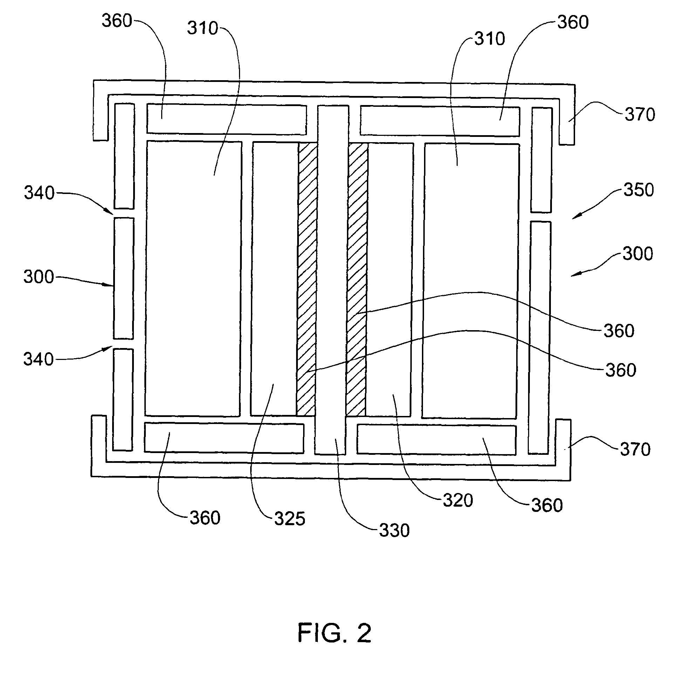

Fig. 2 illustrates a solid feed organic fuel cell having a plastic case **501,** an anode **509,** a cathode **511** and a solid polymer electrolyte membrane **510.** The membrane **510** was a PCM of the kind described in WO99/44245, consisting of 12% SiO₂ 28% PVDF and 60% voids (to which the acid solution was introduced). The anode, cathode and MEA were prepared as in Example 1. The solid organic fuel is filled through the fuel hole **502** and sealed with a cork **503.** The fuel is dissolved in the tank and is absorbed through a hastalloy C-276 (Cabot) net **507** at a porous carbon cloth **508.** Carbon dioxide formed in the anode compartment is vented through an exhaust nozzle **504.** Since liquid fuel may leek through the exhaust nozzle, the nozzle is covered with a thin hydrophobic porous layer **506.** The hydrophobic layer is permeable to the gas only while the fuel solution remains in the tank. The cathode is open to air through a second hastalloy net **513.** In order to prevent the fuel leaking from the cathode side, the MEA is sealed with a gasket **512.** The second hastalloy net **513** is used also as a cover to the whole assembly. 200mg DMO were dissolved into the fuel tank, which contained 1M H₂SO₄ solution. The fuel cell delivered 30mA at 0.35V. The crossover current density was 2 mA/cm² at room temperature.

## Claims

1. Use of an organic compound selected from the group consisting of dimethyl oxalate, ethylene glycol, its oxalic, glyoxalic, and formic esters, glyoxylic acid and its methyl esters, glyoxylic aldehyde, and poly(ethylene oxalate) as fuels in non-alkaline fuel cells having an anode, a cathode comprising an oxygen reduction catalyst **and a fuel oxidation catalyst**, a proton conducting membrane disposed between said anode and said cathode, means for storing or supplying an organic fuel to the anode and means for supplying oxygen to the cathode.

2. Use according to claim 1, wherein said organic compound is selected from the group consisting of dimethyl oxalate, ethylene glycol, its formic acid ester, ethylene oxalate and poly(ethylene oxalate), and mixtures thereof.

3. Use according to claim 1, wherein said organic compound is selected from the group consisting of ethylene glycol, dimethyl oxalate and mixtures thereof.

4. Use according to claim 1, wherein said organic compound is selected from the group consisting of dimethyl oxalate, poly(ethylene oxalate) and mixtures thereof.

5. Use according to any one of Claims 1 to 4 wherein said organic compound is mixed with a known fuel.

6. Use according to claim 5 wherein said known fuel is methanol.

7. Use according to any one of claims 1 to 6 wherein said fuel cell is an acidic electrolyte fuel cell.

8. Use according to **any one of** claims **1 to** 7, wherein the fuel oxidation catalyst is selected from the group consisting of Pt-Ru, Pt-Sn, Pt-Ru-Sn, Pt-Ag-Ru, PtOs and combinations thereof.

9. A direct oxidation non-alkaline fuel cell having an anode, a cathode comprising an oxygen reduction catalyst **and a fuel oxidation catalyst,** a proton conducting membrane disposed between said anode and said cathode, **an organic fuel,** means for storing or supplying **said** organic fuel to the anode, and means for supplying oxygen to the cathode, wherein said organic fuel is selected from the group consisting of dimethyl oxalate, ethylene glycol, its oxalic, glyoxalic, and formic esters, glyoxylic acid and its methyl esters, glyoxylic aldehyde, and poly(ethylene oxalate).

10. A direct oxidation fuel cell according to claim **9** wherein the fuel is selected from the group consisting of dimethyl oxalate, ethylene glycol, its oxalic and formic acid esters, ethylene oxalate, poly(ethylene oxalate), and mixtures thereof.

11. A direct oxidation fuel cell according to claim **10** wherein the fuel is selected from the group consisting of dimethyl oxalate, ethylene glycol, its formic acid ester, ethylene oxalate, poly(ethylene oxalate), and mixtures thereof.

12. A direct oxidation fuel cell according to claim **11** wherein the fuel is selected from the group consisting of dimethyl oxalate, ethylene glycol, and mixtures thereof.

13. A direct oxidation fuel cell according to any one of claims **9** to **12,** wherein said fuel cell is liquid feed.

14. A direct oxidation fuel cell according to claim **13** wherein the fuel is selected from the group consisting of poly(ethlene oxalate), dimethyl oxalate, and mixtures thereof.

15. A direct oxidation fuel cell according to any one of claims **9 to 14,** having a thin hydrophobic porous matrix placed in the anode compartment or in the fuel tank to release therethrough CO₂ produced during the operation of the fuel cell.

16. A direct oxidation fuel cell according to **any one of** claims **9 to 15** wherein the fuel oxidation catalyst is selected from the group consisting of Pt-Ru, Pt-Sn, Pt-Ru-Sn, Pt-Ag.Ru, PtOs and combinations thereof.

17. A method for converting in a non-alkaline fuel cell more than 80% of a fuel to CO₂, the method comprising the steps of:
a) providing a fuel cell having an anode, a cathode, a proton conducting membrane disposed between said anode and said cathode, **said cathode** comprising an oxygen reduction catalyst and a fuel oxidation catalyst, means for storing or supplying an organic fuel to the anode, and means for supplying oxygen to the cathode;
b) fueling said fuel cell; and
c) operating said fuel cell;
**characterized in that** said fuel is selected from dimethyl oxalate, ethylene glycol, its oxalic, glyoxalic, and formic esters, glyoxylic acid and its methyl esters, glyoxylic aldehyde, and poly(ethylene oxalate).

18. A method according to Claim **17** wherein said organic fuel is selected from the group consisting of dimethyl oxalate, ethylene glycol, its formic acid ester, ethylene oxalate and poly(ethylene oxalate) and mixtures thereof.

19. A method according to Claim **18** wherein said organic fuel is selected from the group consisting of ethylene glycol, dimethyl oxalate and mixtures thereof.

20. A method according to Claim **17,** wherein said organic fuel is selected from the group consisting of dimethyl oxalate, poly(ethylene oxalate) and mixtures thereof.

21. A method according to Claim **17** wherein said fuels are mixed with known fuels.

22. A method according to Claim **21** wherein said known fuel is methanol.

23. A method for evaluating the concentration of fuels in a direct oxidation fuel cell as defined in any one of claims **9 to 16,** comprising the following steps:
a) preparing calibration curves of crossover current vs. fuel concentration at said predetermined temperature in a given fuel cell;
b) measuring the crossover current at 1 V and at said predetermined temperature in said given fuel cell; and
evaluating the fuel concentration from the crossover current measured in step b) and the calibration curves prepared in step a).

24. A hybrid power source comprising at least one fuel cell according to any one of claims **9 to 16** having a low crossover current density, a DC to DC converter, and a rechargeable battery.

## Patentansprüche

1. Verwendung einer organischen Verbindung, ausgewählt aus der Gruppe, bestehend aus Dimethyloxalat, Ethylenglykol, seinen Oxalsäure-, Glyoxyl- und Ameisensäureestern, Glyoxylsäure und ihren Methylestern, Glyoxylaldehyd und Poly(ethylenoxolat), als Brennstoff in einer nicht alkalischen Brennstoffzelle mit einer Anode, einer Kathode, umfassend einen Sauerstoffreduktions-Katalysator und einen Brennstoffoxidations-Katalysator, eine protonenleitfähige Membran, welche zwischen der Anode und der Kathode vorgesehen ist, Vorrichtungen zum Lagern oder Zuführen eines organischen Brennstoffes zu der Anode und Vorrichtungen zum Zuführen von Sauerstoff zu der Kathode.

2. Verwendung nach Anspruch 1, worin die organische Verbindung ausgewählt ist aus der Gruppe, bestehend aus Dimethyloxalat, Ethylenglykol, seinem Ameisensäureester, Ethylenoxalat und Poly(ethylenoxalat) und Mischungen davon.

3. Verwendung nach Anspruch 1, worin die organische Verbindung ausgewählt ist aus der Gruppe, bestehend aus Ethylenglykol, Dimethyloxalat und Mischungen davon.

4. Verwendung nach Anspruch 1, worin die organische Verbindung ausgewählt ist aus der Gruppe, bestehend aus Dimethyloxalat, Poly(ethylenoxaiat) und Mischungen davon.

5. Verwendung nach einem der Ansprüche 1 bis 4, worin die organische Verbindung mit einem bekannten Brennstoff gemischt ist.

6. Verwendung nach Anspruch 5, worin der bekannte Brennstoff gleich Methanol ist.

7. Verwendung nach einem der Ansprüche 1 bis 6, worin die Brennstoffzelle eine saure Elektrolyt-Brennstoffzelle ist.

8. Verwendung nach einem der Ansprüche 1 bis 7, worin der Brennstoffoxidations-Katalysator ausgewählt ist aus der Gruppe, bestehend aus Pt-Ru, Pt-Sn, Pt-Ru-Sn, Pt-Ag-Ru, PtOs und Kombinationen davon.

9. Eine nicht-alkalische Brennstoffzelle der direkten Oxidation mit einer Anode, einer Kathode, umfassend einen Sauerstoffreduktions-Katalysator und einen Brennstoffoxidations-Katalysator, eine protonenleitende Membran, welche zwischen der Anode und der Kathode vorgesehen ist, einen organischen Brennstoff, Vorrichtungen zum Lagern und Zuführen des organischen Brennstoffes zu der Anode und Vorrichtungen zum Zuführen von Sauerstoff zu der Kathode, worin der organische Brennstoff ausgewählt ist aus der Gruppe, bestehend aus Dimethyloxalat, Ethylenglykol, seinen Oxalsäure-, Glyoxyl- und Ameisensäureestern, Glyoxylsäure und ihren Methylestern, Glyoxylaldehyd und Poly(ethylenoxalat).

10. Eine Brennstoffzelle der direkten Oxidation nach Anspruch 9, worin der Brennstoff ausgewählt ist aus der Gruppe, bestehend aus Dimethyloxalat, Ethylenglykol, seinen Oxalsäure- und Ameisensäureestern, Ethylenoxalat, Poly(ethylenoxalat) und Mischungen davon.

11. Eine Brennstoffzelle der direkten Oxidation nach Anspruch 10, worin der Brennstoff ausgewählt ist aus der Gruppe, bestehend aus Dimethyloxalat, Ethylenglykol, seinem Ameisensäureester, Ethylenoxalat, Poly(ethylenoxalat) und Mischungen davon.

12. Eine Brennstoffzelle der direkten Oxidation nach Anspruch 11, worin der Brennstoff ausgewählt ist aus der Gruppe, bestehend aus Dimethyloxalat, Ethylenglykol und Mischungen davon.

13. Eine Brennstoffzelle der direkten Oxidation nach einem der Ansprüche 9 bis 12, worin die Brennstoffzelle eine flüssige Zuführung aufweist.

14. Eine Brennstoffzelle der direkten Oxidation nach Anspruch 13, worin der Brennstoff ausgewählt ist aus der Gruppe, bestehend aus Poly(ethylenoxalat), Dimethyloxalat und Mischungen davon.

15. Eine Brennstoffzelle der direkten Oxidation nach einem der Ansprüche 9 bis 14 mit einer dünnen hydrophoben porösen Matrix, welche in dem Anodenraum oder in dem Brennstoffzellentank vorgesehen ist, um **dadurch** CO₂, welches während dem Betrieb der Brennstoffzelle erzeugt wird, freizusetzen.

16. Eine Brennstoffzelle der direkten Oxidation nach einem der Ansprüche 9 bis 15, worin der Brennstoffoxidations-Katalysator ausgewählt ist aus der Gruppe, bestehend aus Pt-Ru, Pt-Sn, Pt-Ru-Sn, Pt-Ag-Ru, PtOs und Kombinationen davon.

17. Ein Verfahren zum Umwandeln von mehr als 80 % eines Brennstoffes in CO₂ in einer nicht alkalischen Brennstoffzelle, wobei das Verfahren die Schritte umfasst:
a) Bereitstellen einer Brennstoffzelle mit einer Anode, einer Kathode, einer protonenleitenden Membran, welche zwischen der Anode und der Kathode vorgesehen ist, wobei die Kathode einen Sauerstoffreduktions-Katalysator und einen Brennstoffoxidations-Katalysator umfasst, Vorrichtungen zum Lagern oder Zuführen eines organischen Brennstoffes zu der Anode und Vorrichtungen zum Zuführen von Sauerstoff zu der Kathode;
b) Beschicken der Brennstoffzelle; und
c) Betreiben der Brennstoffzelle;
**dadurch gekennzeichnet, dass** der Brennstoff ausgewählt ist aus Dimethyloxalot, Ethylenglykol, seinen Oxalsäure-, Glyoxyl- und Ameisensäureestern, Glyoxylsäure und ihren Methylestern, Glyoxylaldehyd und Poly(ethylenoxalat).

18. Ein Verfahren nach Anspruch 17, worin der organische Brennstoff ausgewählt ist aus der Gruppe, bestehend aus Dimethyloxalat, Ethylenglykol, seinem Ameisensäureester, Ethylenoxalat und Poly/ethylenoxalat) und Mischungen davon.

19. Ein Verfahren nach Anspruch 18, worin der organische Brennstoff ausgewählt ist aus der Gruppe, bestehend aus Ethylenglykol, Dimethyloxalat und Mischungen davon.

20. Ein Verfahren nach Anspruch 17, worin der organische Brennstoff ausgewählt ist aus der Gruppe, bestehend aus Dimethyloxalat, Poly(ethylenoxalat) und Mischungen davon.

21. Ein Verfahren nach Anspruch 17, worin die Brennstoffe gemischt werden mit bekannten Brennstoffen.

22. Ein Verfahren nach Anspruch 21, worin der bekannte Brennstoff Methanol ist.

23. Ein Verfahren zum Bewerten der Konzentration von Brennstoffen in einer Brennstoffzelle der direkten Oxidation, wie in einem der Ansprüche 9 bis 16 definiert, umfassend die folgenden Schritte:
a) Erzeugen von Kalibrationskurven des Crossover-Flusses gegenüber der Brennstoffkonzentration bei einer vorbestimmten Temperatur in einer vorgegebenen Brennstoffzelle:
b) Messen des Crossover-Flusses bei 1 Volt bei der vorbestimmten Temperatur in der vorgegebenen Brennstoffzelle; und
Bewerten der Brennstoffkonzentration aus dem Crossover-Strom, welcher in Schritt b) gemessen wurde, und den Kolibrationskurven, welche in Schritt a) erzeugt wurden.

24. Eine Hybridstromquelle, umfassend mindestens eine Brennstoffzelle gemäß einem der Ansprüche 9 bis 16 mit einer niedrigen Crossover-Flussdichte, einem DC zu DC-Konverter und einer wiederaufladbaren Batterie.

## Revendications

1. Utilisation d'un composé organique choisi dans l'ensemble constitué par l'oxalate de diméthyle, l'éthylèneglycol, ses esters oxalate, glyoxalate et formiate, l'acide glyoxylique et ses esters méthyliques, le glyoxaldéhyde, et le poly(oxalate d'éthylène), en tant que combustible dans des piles à combustible non alcalines ayant une anode, une cathode comprenant un catalyseur de réduction d'oxygène et un catalyseur d'oxydation de combustible, une membrane conductrice de protons disposée entre ladite anode et ladite cathode, des moyens pour stocker ou fournir un combustible organique à l'anode, et des moyens pour fournir de l'oxygène à la cathode.

2. Utilisation selon la revendication 1, dans laquelle ledit composé organique est choisi dans l'ensemble constitué par oxalate de diméthyle, l'éthylèneglycol, son ester d'acide formique, l'oxalate d'éthylène et le poly(oxalate d'ethylène), et leurs mélanges.

3. Utilisation selon la revendication 1, dans laquelle ledit composé organique est choisi dans l'ensemble constitué par l'éthylèneglycol, l'oxalate de diméthyle et leurs mélanges.

4. Utilisation selon la revendication 1, dans laquelle ledit composé organique est choisi dans l'ensemble constitué par l'oxalate de diméthyle, le poly(oxalate d'ethylène) et leurs mélanges.

5. Utilisation selon l'une quelconque des revendications 1 à 4, dans laquelle ledit composé organique est mélangé avec un combustible connu.

6. Utilisation selon la revendication 5, dans laquelle ledit combustible connu est le méthanol.

7. Utilisation selon l'une quelconque des revendications 1 à 6, dans laquelle ladite pile à combustible est une pile à combustible à électrolyte acide.

8. Utilisation selon l'une quelconque des revendications 1 à 7, dans laquelle le catalyseur d'oxydation de combustible est choisi dans l'ensemble constitué par Pt-Ru, Pt-Sn, Pt-Ru-Sn, Pt-Ag-Ru, PtOs et leurs combinaisons.

9. Pile à combustible non alcaline à oxydation directe ayant une anode, une cathode comprenant un catalyseur de réduction d'oxygène et un catalyseur d'oxydation de combustible, une membrane conductrice de protons disposée entre ladite anode et ladite cathode, un combustible organique, des moyens pour stocker ou fournir ledit combustible organique à anode, et des moyens pour fournir de l'oxygène à la cathode, dans laquelle ledit combustible organique est choisi dans l'ensemble constitué par l'oxalate de diméthyle, l'éthyleneglycol, ses esters oxalate, glyoxalate et formiate, l'acide glyoxylique et ses esters méthyliques, le glyoxaldéhydc, et le poly(oxalate d'éthylène).

10. Pile à combustible à oxydation directe selon la revendication 9, dans laquelle le combustible est choisi dans l'ensemble constitué par l'oxalate de diméthyle, l'éthyleneglycol, ses esters oxalate et formiate, l'oxalate d'éthylène, le poly(oxalate d'éthylène), et leurs mélanges.

11. Pile à combustible à oxydation directe selon la revendication 10, dans laquelle le combustible est choisi dans l'ensemble constitué par l'oxalate de diméthyle, l'éthyleneglycol, son ester d'acide formique, l'oxalate d'éthylène, le poly(oxalate d'éthylène), et leurs mélanges.

12. Pile à combustible à oxydation directe selon la revendication 11, dans laquelle le combustible est choisi dans l'ensemble constitué par l'oxalate de diméthyle, l'éthylèneglycol, et leurs mélanges.

13. Pile à combustible à oxydation directe selon l'une quelconque des revendications 9 à 12, laquelle pile à combustible est alimentée par du liquide.

14. Pile à combustible à oxydation directe selon la revendication 13, dans laquelle le combustible est choisi dans l'ensemble constitué par le poly(oxalate d'éthylene), l'oxalate de diméthyle, et leurs mélanges.

15. Pile à combustible à oxydation directe selon l'une quelconque des revendications 9 à 14, ayant une matrice poreuse hydrophobe mince placée dans le compartiment d'anode ou dans le réservoir de combustible pour libérer à travers celle-ci le CO₂ produit durant le fonctionnement de la pile à combustible.

16. Pile à combustible à oxydation directe selon l'une quelconque des revendications 9 à 15, dans laquelle le catalyseur d'oxydation de combustible est choisi dans l'ensemble constitué par Pt-Ru, Pt-Sn, Pt-Ru-Sn, Pt-Ag-Ru, PtOs et leurs combinaisons.

17. Procédé pour convertir, dans une pile à combustible non alcaline, plus de 80 % d'un combustible en CO₂, le procédé comprenant les étapes consistant à :
a) disposer d'une pile à combustible ayant une anode, une cathode, une membrane conductrice de protons disposée entre ladite anode et ladite cathode, ladite cathode comprenant un catalyseur de réduction d'oxygène et un catalyseur d'oxydation de combustible, des moyens pour stocker ou fournir un combustible organique à l'anode, et des moyens pour fournir de l'oxygène à la cathode ;
b) alimenter en combustible, ladite pile à combustible ; et
c) faire fonctionner ladite pile à combustible ;
**caractérisé en ce que** ledit combustible est choisi parmi l'oxalate de diméthyle, l'éthyleneglycol, ses esters oxalate, glyoxalate et formiate, l'acide glyoxylique et ses esters méthyliques, le glyoxaldéhyde, et le poly(oxalate d'éthylène),

18. Procédé selon la revendication 17, dans lequel ledit combustible organique est choisi dans l'ensemble constitué par oxalate de diméthyle, l'éthyleneglycol, son ester d'acide formique, l'oxalate d'éthylène et le poly(oxalate d'éthylène) et leurs mélanges.

19. Procédé selon la revendication 18, dans lequel ledit combustible organique est choisi dans l'ensemble constitué par l'éthylèneglycol, l'oxalate de diméthyle et leurs mélanges.

20. Procédé selon la revendication 17, dans lequel ledit combustible organique est choisi dans l'ensemble constitué par l'oxalate de diméthyle, le poly(oxalate d'éthylène) et leurs mélanges.

21. Procédé selon la revendication 17, dans lequel lesdits combustibles sont mélangés avec des combustibles connus.

22. Procédé selon la revendication 21, dans lequel ledit combustible connu est le méthanol.

23. Procédé pour évaluer la concentration de combustibles dans une pile à combustible à oxydation directe telle que définie dans l'une quelconque des revendications 9 à 16, comprenant les étapes suivantes :
a) préparation de courbes d'étalonnage du courant de recouvrement en fonction de la concentration de combustible à ladite température prédéterminée dans une pile à combustible donnée ;
b) mesure du courant de recouvrement à 1 V et à ladite température prédéterminée dans ladite pile à combustible donnée ; et
évaluation de la concentration de combustible à partir du courant de recouvrement mesuré dans l'étape b) et des courbes d'étalonnage préparées dans l'étape a).

24. Source d'énergie hybride comprenant au moins une pile à combustible selon l'une quelconque des revendications 9 à 16 ayant une faible densité de courant de recouvrement, un convertisseur de courant continu en courant continu, et une batterie rechargeable.
